# EUROPÄISCHE PATENTSCHRIFT

(11) **EP 2 921 322 B1**
(45) Veröffentlichungstag und Bekanntmachung des Hinweises auf die Patenterteilung: **28.03.2018**
(21) Anmeldenummer: 15000120.4
(22) Anmeldetag: 17.01.2015
(51) Int. Cl.: B60C 11/24, F16D 65/12, F16D 66/02, F16D 65/02, G06K 19/06

(54) **Bremsscheibe mit einem Verschleissindikator und System zur Verschleissprüfung**
Brake disc with a wear indicator and system for wear testing
Disque de frein doté d'un indicateur d'usure et système de contrôle d'usure

(30) Priorität: 19.03.2014 DE 102014003985
(43) Veröffentlichungstag der Anmeldung: 23.09.2015
(60) Teilanmeldung: 16001973.3
(73) Patentinhaber: MAN Truck & Bus AG, 80995 München (DE)
(72) Erfinder: Butz, Matthias, 80637 München (DE)
(74) Vertreter: v. Bezold & Partner Patentanwälte - PartG mbB

(56) Entgegenhaltungen:
- EP-A1- 0 985 841
- EP-A2- 1 063 442
- WO-A2-2007/102790
- DE-A1- 4 002 695
- DE-A1-102010 037 382
- DE-A1-102011 050 911
- JP-A- 2009 107 484
- US-A1- 2002 036 039

## Beschreibung

Die Erfindung betrifft ein Verschleißteil, nämlich eine Bremsscheibe, vorzugsweise für ein Fahrzeug, mit einem Verschleißindikator, dessen Erscheinung sich in Abhängigkeit von einem Verschleißzustand des Verschleißteils ändert. Die Erfindung betrifft ferner ein System zur Verschleißprüfung.

Aus den Offenlegungsschriften DE 40 02 695 A1, EP 0 985 841 A1 und EP 1 063 442 A2 sind Bremsscheiben mit einem visuellen Verschleißindikator bekannt. Hierbei sind die visuellen Verschleißindikatoren als Nuten beziehungsweise Vertiefungen ausgebildet, die in die Reibfläche eingebracht sind, und deren Tiefe kleiner als das maximale Verschleißtiefenmaß ist. Solange die Nuten noch sichtbar sind, hat die Bremsscheibe somit noch keinen kritischen Verschleißzustand erreicht. Erst wenn die Reibfläche soweit abgetragen ist, dass die Nuten nicht mehr sichtbar sind, ist dies ein Indikator, dass die Bremsscheibe erneuert werden muss. Nachteilig hieran ist, dass mit derartigen visuellen Verschleißindikatoren keine genaue Bestimmung des Fortschritts des Verschleißzustands möglich ist. Die gattungsgemäße DE 10 2010 037382 A1 schlägt eine Bremsscheibe mit einem Einsatz beispielsweise aus Kupfer vor, der in die Bremsscheibe eingepresst ist. Hierbei ist der Durchmesser des Einsatzes auf der nach außen weisenden Seite der Ausnehmung zunächst gestuft erweitert und dann kegelspitzartig verjüngt. Bei einer unbenutzten Bremsscheibe ist der Einsatz grünlich verfärbt, weil das Kupfer anläuft. Sobald die Nutzschicht soweit abgenutzt ist, dass der Bremsbelag beim Bremsen auch den Einsatz berührt, wird die Kupferoberfläche angeschnitten und der blanke angeschliffene Teil wird als rötlicher Punkt in einem grünen Ring auf der Reibfläche sichtbar. Mit fortschreitender Abnutzung der Nutzschicht nimmt der Durchmesser des roten Punktes zu und der grüne Ring verschwindet. Der Durchmesser des roten Punktes dient somit als Verschleißindikator. Diese Bestimmung des Verschleißzustandes ist fehleranfällig, da die Zuverlässigkeit davon abhängt, ob ein Nutzer bei einer Sichtprüfung die Größe des Durchmessers korrekt einem Verschleißzustand zuordnen kann.

Aus der Praxis ist es bekannt, dass der Verschleißzustand eines Reifens regelmäßig geprüft werden muss, um die Funktionalität des Reifens zu überwachen und um gesetzliche Vorschriften zu erfüllen. Bei Nutzfahrzeugen können nach Erreichen der Verschleißgrenze Reifen bis zu zweimal nachgeschnitten und einmal runderneuert werden. Zur Abschätzung, wann ein Tausch bzw. eine Erneuerung der Reifen oder Profile notwendig ist, kommen Verschleißmerkmale und -prognosen zum Einsatz.

Aus dem Stand der Technik sind beispielsweise Verfahren bekannt, die aus dem Fahrverhalten des Fahrers den Reifenverschleißzustand abschätzen. Aus der EP 1 798 071 A3, der US 6289958 B1 und der US 7050017 B2 sind ferner Verfahren bekannt, bei denen Sensoren in die Reifen eingearbeitet werden, die den aktuellen Reifenzustand messen.

Des Weiteren sind auch Verschleißmerkmale bekannt, die entweder akustisch (vgl. DE 18 03 483 A1, US 2012/0010776 A1, und US 2012/0266649 A1) oder optisch eine Rückmeldung geben und dann vom Fahrer selbst oder einem elektronischen System ausgewertet werden. Aus dem Stand der Technik sind optische Verschleißmerkmale bekannt, die nur den Endverschleißzustand farblich bzw. mit Endverschleißreferenzformen visualisieren (vgl. US 6220199 B1, DE 24 57 334 C3) oder die durch ihre kontinuierliche Formänderung den Fortschritt des Verschleißes visualisieren (DE 36 27 833 A1, US 8162014 B2, EP 1 705 034 B9, WO 2001/0012735 A1, US 2102784 A1).

Die bekannten Ansätze weisen eine Reihe von Nachteilen auf. Die vorstehend genannten Schätzverfahren, die aus dem Fahrverhalten einen Verschleiß errechnen, können nicht alle äußeren Umstände berücksichtigen und sind daher ungenau. Eine automatische Speicherung und Auswertung des Verschleißzustands kann nur mit integrierten Reifensensoren oder optischen Systemen erreicht werden. Sensoren, die in den Reifen eingearbeitet werden, haben jedoch den Nachteil, dass diese teuer sind und robust ausgeführt sein müssen, um eine Runderneuerung bzw. ein Nachschneiden zu ermöglichen.

Die vorstehend genannten Systeme, die ein optisches Merkmal sicher erfassen und auswerten können, bedürfen einer hohen Qualität und sind somit ebenfalls sehr kostenaufwändig. Eine Vertiefung oder Erhebung in einem Reifen ist zudem mit einfachen optischen Systemen nur schwer zu erfassen. Verschleißmerkale in Form von Taschen können sich zudem mit Schmutz, Schlamm oder anderen Verunreinigungen füllen und das Messen und Erkennen des Merkmals zusätzlich erschweren. Aufgrund der dunklen Farbe des Reifens ist selbst ohne Verschmutzung der Kontrast zwischen Lauffläche und Verschleißmerkmal zu gering, um ihn sicher erkennen zu können. Bei den aus dem Stand der Technik bekannten Verfahren können daher Messfehler nicht ausgeschlossen werden.

Es ist somit eine Aufgabe der Erfindung, eine Bremsscheibe umfassend einen verbesserten Verschleißindikator bereitzustellen, mit dem Nachteile herkömmlicher Techniken zur Verschleißprüfung vermieden werden können. Die Aufgabe der Erfindung ist es insbesondere, einen Verschleißindikator bereitzustellen, mit dem der Verschleißzustand zuverlässig erkannt und ausgewertet werden kann. Es ist eine weitere Aufgabe der Erfindung, ein System zur Verschleißprüfung bereitzustellen, das eine schnelle und sichere Erfassung und Überwachung des Verschleißzustandes des Verschleißteils ermöglicht.

Diese Aufgaben werden durch eine Bremsscheibe mit einem Verschleißindikator gemäß den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Bremsscheibe für ein Fahrzeug weist in Übereinstimmung mit dem Stand der Technik einen Verschleißindikator auf, dessen Erscheinung sich in Abhängigkeit von einem Verschleißzustand des Verschleißteils ändert.

Gemäß allgemeinen Gesichtspunkten der Erfindung umfasst der Verschleißindikator ein mehrdimensionales Muster, das so am Verschleißteil angeordnet ist, dass in Abhängigkeit von dem Verschleißzustand unterschiedliche Ebenen des Musters freigelegt sind.

Ein mehrdimensionales Muster im Sinne dieser Erfindung umfasst eine Mehrzahl von in Verschleißrichtung übereinander angeordneten unterschiedlichen (Verschleiß-)Ebenen, die jeweils ein Muster aufweisen, das jeweils einem Verschleißzustand zugeordnet ist. Bei zunehmendem Verschleiß des Verschleißteils werden nacheinander verschiedene Ebenen des mehrdimensionalen Musters verschleißbedingt abgetragen, so dass in Abhängigkeit vom Verschleißzustand unterschiedliche Muster in einer zweidimensionalen Fläche sichtbar sein können. Die Anzahl in Verschleißrichtung übereinander angeordneter Muster ist dabei nicht auf eine bestimmte Zahl beschränkt. Je höher die Zahl derart übereinander angeordneter Muster, desto höher die Anzahl der bestimmbaren unterschiedlicher Verschleißzustände.

Vorzugsweise ändert sich das mehrdimensionale Muster in Verschleißrichtung diskret, derart, dass in jedem Verschleißzustand eindeutig feststellbar ist, welches der übereinander angeordneten Muster freigelegt ist. Bei einer diskreten Änderung des Musters ändert sich zumindest ein Teil des Musters mit abnehmender Verschleißhöhe diskret, also nicht kontinuierlich. Anhand der diskreten Änderung kann zuverlässig der zu dem bestimmten freigelegten Muster zugeordnete Verschleißzustand bestimmt werden.

Gemäß einem vorteilhaften Ausführungsbeispiel ist die jeweils freigelegte Ebene des Musters opto-elektronisch lesbar ausgeführt. Das Muster kann beispielsweise ein 2D-Code, vorzugsweise ein QR®-Code, oder 1D-Code, vorzugsweise ein Strichcode sein, wie nachfolgend noch detaillierter beschrieben wird. Dies ermöglicht das schnelle Auslesen des Verschleißzustandes mit einem geeigneten optischen Lesegerät.

Die jeweils freigelegte Ebene des Musters codiert Daten, die indikativ für den jeweiligen Verschleißzustand sind. In den verschiedenen Ebenen des dreidimensionalen Musters können somit jeweils Daten betreffend den zugeordneten Verschleißzustand codiert sein, beispielsweise in binärer Form mittels eines QR®-Codes oder als Zeichen, codiert mittels eines Strichcodes. Dies ermöglicht ein digitales Auswerten und dadurch eine geringere Fehlernfälligkeit als bei analogen Auswerteverfahren. Ein weiterer Vorzug liegt darin, dass die Daten den Verschleißzustand genau beschreiben können, beispielsweise in Form einer Prozentangabe.

Beispielsweise können die verschiedenen Ebenen des dreidimensionalen Musters einen eindimensionalen oder zweidimensionalen maschinenlesbaren Code umfassen.

Gemäß einem bevorzugten Ausführungsbeispiel stellen die verschiedenen Ebenen des mehrdimensionalen Musters jeweils einen 2D-Code, vorzugsweise einen QR®-Code, dar. Gemäß dieser Ausführungsvariante ist das dreidimensionale Muster somit als 2D-Code, z. B. als QR®-Code, ausgeführt, der seine Form bzw. sein Aussehen in Verschleißrichtung ändert, so dass sich der Informationsgehalt des 2D-Codes mit abnehmender Verschleißhöhe ändert. Der Verschleißindikator kann in der Ausführungsvariante mit QR®-Codes somit aus einer Mehrzahl übereinander angeordneter zweidimensionaler QR®-Codes bestehen. Der QR®-Code gemäß dieser Ausführungsvariante kann somit als dreidimensionaler QR®-Code bezeichnet werden.

Der Verschleißindikator mit dem dreidimensionalen QR®-Code wird so am Verschleißteil angeordnet, dass aufgrund des Verschleißes nacheinander die einzelnen Ebenen des QR®-Codes abgetragen werden und in Abhängigkeit vom Verschleißzustand immer jeweils ein zweidimensionaler QR®-Code sichtbar ist, der Informationen bzw. Daten betreffend den aktuellen Verschleißzustand binär codiert. Der QR®-Code kann ein Micro-QR®-Code oder ein iQR®-Code sein.

Bei einer weiteren Variante wird anstatt eines 2D-Codes bzw. QR®-Codes ein herkömmlicher 1D-Code, z. B. ein Strichcode (engl. Barcode) verwendet, so dass die verschiedenen Ebenen des Musters jeweils einen Strichcode darstellen.

Ein besonderer Vorteil der Verwendung der erfindungsgemäßen mehrdimensionalen 2D-Codes oder 1D-Codes ist, dass der in einem Verschleißzustand jeweils freigelegte zweidimensionale 2D-Code oder 1D-Code opto-elektronisch auslesbar ist. Hierzu kann insbesondere ein herkömmliches Endverbraucher-Mobilgerät verwendet werden, beispielsweise ein Smartphone oder Tablet-Computer, die mittels einer entsprechenden Applikationssoftware zum Auslesen von 2D-Codes oder 1D-Codes bzw. QR-Codes oder Strichcodes eingerichtet sind.

Bei einer vorteilhaften Variante der vorgenannten Ausführungsformen kann sich eine Form des 2D-Codes und/oder des 1D-Codes in Verschleißrichtung so ändern, dass eine Anzahl und/oder Form und/oder Lage und/oder Farbe von Informationsträgern abnimmt. Bei einem 2D-Code sind die Informationsträger die schwarzen Flächen und bei einem Strichcode die schwarzen Balken jeweils in Bezug zu den weißen Flächen bzw. weißen Balken. Dies ermöglicht eine besonders einfache Herstellung des dreidimensionalen 2D-Codes bzw. 1D-Codes.

Ferner kann das Muster so ausgebildet sein, dass zusätzlich andere, insbesondere verschleißzustandsunabhängige Eigenschaften des Verschleißteils codiert werden. Die verschleißzustandsunabhängigen Eigenschaften können beispielsweise eine Angabe betreffend den Hersteller, das Herstellungsdatums oder den Typ des Verschleißteils sein. Insbesondere bei Reifen können die verschleißzustandsunabhängigen Eigenschaften auch eine Angabe enthalten, ob und/oder wie oft der Reifen nachgeschnitten oder runderneuert wurde.

Ein besonderer Vorzug des erfindungsgemäßen Verschleißindikators liegt somit darin, dass mittels des mehrdimensionalen Musters, beispielsweise des dreidimensionalen bzw. mehrschichtigen QR®-Codes, sowohl verschleißzustandsabhängige als auch verschleißzustandsunabhängige Daten codiert werden können, die eine verbesserte Analyse des Verschleißzustands ermöglichen.

Bei einer vorteilhaften Variante dieser Ausgestaltungsform ist der Verschleißindikator so ausgebildet, dass die verschleißzustandsunabhängigen Eigenschaften des Verschleißteils in einem Bereich codiert sind, der sich in Verschleißrichtung nicht ändert. Gemäß dieser Ausführungsvariante kann somit die Anordnung derjenigen Informationsträger, beispielsweise des QR®-Codes oder des Strichcodes, die die verschleißzustandsunabhängigen Eigenschaften des Verschleißteils codieren, in jeder Ebene gleich sein.

Ferner besteht im Rahmen der Erfindung die Möglichkeit, dass das Verschleißmerkmal als separat hergestelltes Bauteil hergestellt und nachträglich in eine vorhandene Tasche des Verschleißteils eingebracht ist.

Vorstehend wurde bereits erwähnt, dass das erfindungsgemäß Verschleißteil eine Bremsscheibe ist. Der Verschleißindikator ist in einer Bremsfläche, auch Reibfläche genannt, der Bremsscheibe eingebracht.

Beispielsweise kann das mehrdimensionale Muster durch eine Mehrzahl von nebeneinander angeordneten Taschen oder Erhebungen gebildet sein, die in die Reibfläche der Bremsscheibe eingebracht sind. Ein mehrdimensionales Muster bedeutet hier wiederum, dass sich das Muster über eine Fläche senkrecht zur Verschleißrichtung sowie in Verschleißrichtung erstreckt. Ferner kann sich in Abhängigkeit vom Verschleiß der Reibfläche die Zahl, Form und/oder Lage der in Draufsicht auf die Reibfläche sichtbaren Taschen oder Erhebungen diskret ändern.

Somit ändert sich die Kontur des Verschleißindikators in Abhängigkeit vom Verschleißzustand, und der Verschleißzustand kann aus der in Draufsicht auf die Bremsscheibe sichtbaren Zahl, Form und/oder Lage der Taschen und/oder Erhebungen bestimmt werden. Gemäß einer weiteren Variante kann das Muster wiederum als mehrschichtiger QR®-Code oder mehrschichtiger Strichcode ausgebildet sein, der in die Bremsscheibe eingebracht ist. Der Begriff "mehrschichtig" bedeutet hier und in Zusammenhang mit den nachfolgenden Ausführungen, dass das Muster, z. B. der Code, mehrere in Verschleißrichtung übereinander angeordnete Ebenen aufweist, in denen das Muster unterschiedlich ausgeprägt ist. Der Begriff einer Schicht ist also in diesem Zusammenhang nicht zwangsläufig als eine stofflich abgeschlossene Materialeinheit zu verstehen.

Ein weiterer Aspekt der Erfindung betrifft ein System zur Verschleißprüfung. Das System umfasst ein Verschleißteil mit einem Verschleißindikator nach einem der vorhergehenden Aspekte. Das System umfasst ferner ein multifunktionell nutzbares Endverbrauchermobilgerät, das mittels einer Applikationssoftware eingerichtet ist, ein jeweils sichtbares flächiges Muster des Verschleißindikators, beispielsweise einen sichtbaren 1D-Code oder 2D-Code des Musters opto-elektronisch zu erfassen und auf Basis des erfassten dreidimensionalen Musters einen Verschleißzustand des Verschleißteils festzustellen.

Das multifunktionell nutzbare Endverbrauchmobilgerät kann beispielsweise ein herkömmlicher handgehaltener Mobilcomputer, z. B. ein Smartphone oder ein Tablet-Computer, sein. In diesem Falle kann die Applikationssoftware eine sogenannte mobile App für das Smartphone oder den Tablet-Computer sein. Mit dem Endverbrauchermobilgerät kann der Verschleißindikator bei jeder Abfahrtskontrolle oder bei Bedarf vom Fahrer mit der Kamera des Geräts ausgelesen werden.

Das Mobilgerät kann hierbei programmtechnisch so eingerichtet sein, dass zusätzlich zu den ausgelesenen verschleißzustandsabhängigen und verschleißzustandsunabhängigen Informationen, wie vorstehend beschrieben, auch Daten betreffend den aktuellen Ort und das Datum automatisch an eine zentrale Stelle, beispielsweise den Spediteur, gemeldet werden. In einem derartigen System kann ferner sichergestellt werden, dass vom Fahrer regelmäßig eine Abfahrtskontrolle durchgeführt wird. Ferner ist es möglich, über zeitlich gehäufte Auswertungen die Reststandzeit des Reifens zu ermitteln, um einen zukünftigen Reifenwechsel zu planen.

Ein besonderer Vorzug der Erfindung liegt somit darin, dass die gezeigten Verschleißindikatoren maschinenlesbar sind und insbesondere mittels eines herkömmlichen Smartphones, das mittels einer Applikationssoftware entsprechend eingerichtet ist, ausgelesen werden können. Die ausgelesenen Verschleißdaten können ferner über eine Telematik-Software an einen zentralen Rechner zur Ablage geschickt werden, wodurch der Fortschritt des Verschleißes dokumentiert und prognostiziert werden kann.

Ein weiterer Aspekt der Erfindung betrifft ein Fahrzeug, insbesondere ein Nutzfahrzeug, mit einem Verschleißteil nach einem der vorhergehenden Aspekte.

Weitere Einzelheiten und Vorteile der Erfindung werden im Folgenden unter Bezug auf die beigefügten Zeichnungen beschrieben. Es zeigen:
- Figur 1: eine perspektivische Ansicht eines Reifens mit eingebrachtem QR®-Code als Verschleißindikator gemäß einem illustrativen, nicht beanspruchten Beispiel;
- Figur 2A und Figur 2B: die Form des QR®-Codes der Figur 1 in einem ersten Verschleißzustand;
- Figur 3A und Figur 3B: die Form des QR®-Codes der Figur 1 in einem zweiten Verschleißzustand;
- Figur 4A und Figur 4B: die Form des QR®-Codes der Figur 1 in einem dritten Verschleißzustand;
- Figur 5A: einen Reifen mit einer Tasche zur Einbringung des Verschleißindikators;
- Figur 5B: schematisch den mehrschichtigen Aufbau des QR®-Codes;
- Figur 6: eine Schnittansicht einer Bremsscheibe mit eingebrachtem QR®-Code als Verschleißindikator gemäß einem weiteren Ausführungsbeispiel;
- Figur 7: die Form des QR®-Codes in einem ersten Verschleißzustand;
- Figur 8: die Form des QR®-Codes in einem zweiten Verschleißzustand;
- Figur 9: die Form des QR®-Codes in einem dritten Verschleißzustand; und
- Figur 10A und Figur 10B: schematisch den mehrschichtigen Aufbau und das Einbringen des QR®-Codes in die Reibfläche der Bremsscheibe.

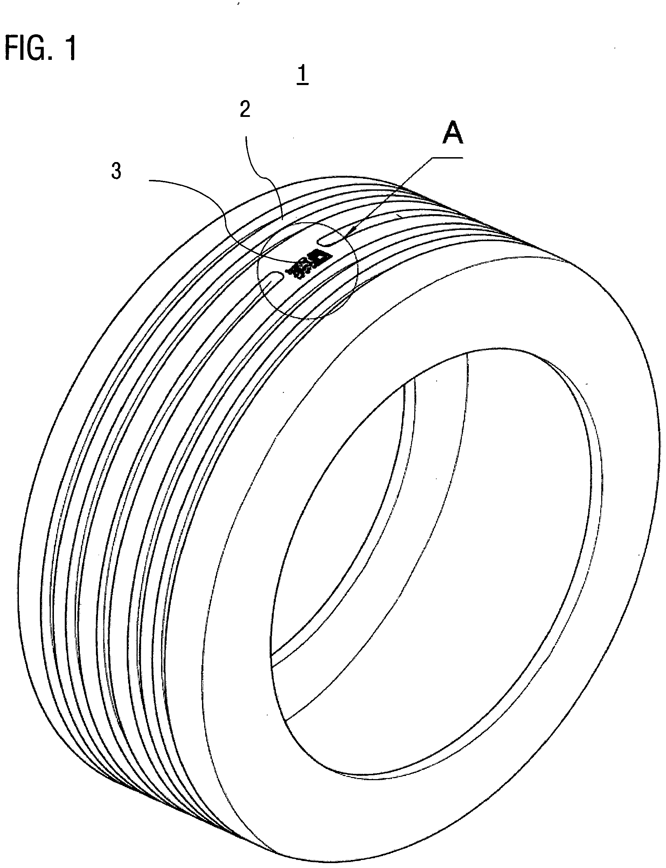

Die Figuren 1 bis 4B illustrieren ein illustratives Beispiel, das nicht unter die beanspruchte Erfindung fällt. Figur 1 zeigt eine perspektivische Ansicht eines Fahrzeugreifens 1, bei dem in die Lauffläche 2 ein Verschleißindikator in Form eines mehrschichtigen QR®-Codes 3 eingebracht ist. Der QR®-Code ist als iQR-Code ausgeführt, der insbesondere für zylindrische Oberflächen geeignet ist.

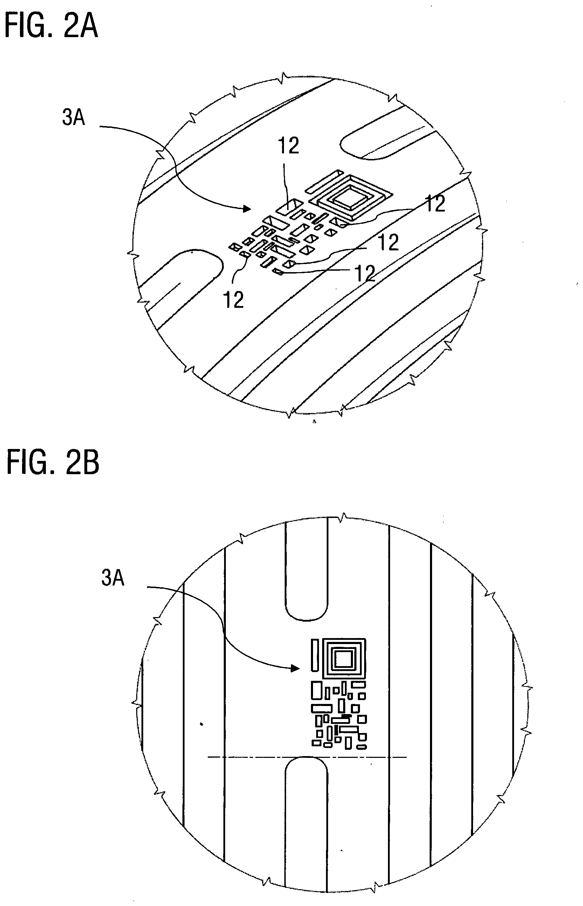

Figur 2A zeigt eine perspektivisch vergrößerte Ansicht des Ausschnitts A der Figur 1, und Figur 2B zeigt eine vergrößerte Draufsicht des Ausschnittes A der Figur 1. Die Figuren 2A und 2B zeigen insbesondere die oberste Ebene 3A des QR®-Codes im Neuzustand des Reifens.

Die Informationsträger des QR®-Codes, d. h. die schwarzen Punkte und Striche 12 des QR®-Codes, sind durch Reifenmaterial gebildet. Aus Gründen der vereinfachten Darstellbarkeit und besseren Übersichtlichkeit sind nur einige der Punkte bzw. Striche des QR®-Codes mit dem Bezugszeichen 12 gekennzeichnet.

Der Zwischenraum zwischen den Informationsträgern 12 ist jeweils als Tasche ausgeführt. Die aktuelle Form des QR®-Codes beschreibt den Reifenverschleißzustand und weitere Informationen zum Reifen in digitaler Weise und kann z. B. mit einem Smartphone über dessen Kamera opto-elektronisch ausgelesen werden.

Der QR®-Code ist mehrschichtig ausgeführt, derart, dass mit zunehmendem Verschleiß einzelne Informationsträger (Punkte oder Striche 12) verschwinden. Mit zunehmendem Verschleiß ändert sich somit die Kontur des QR®-Codes und somit sein Informationsgehalt.

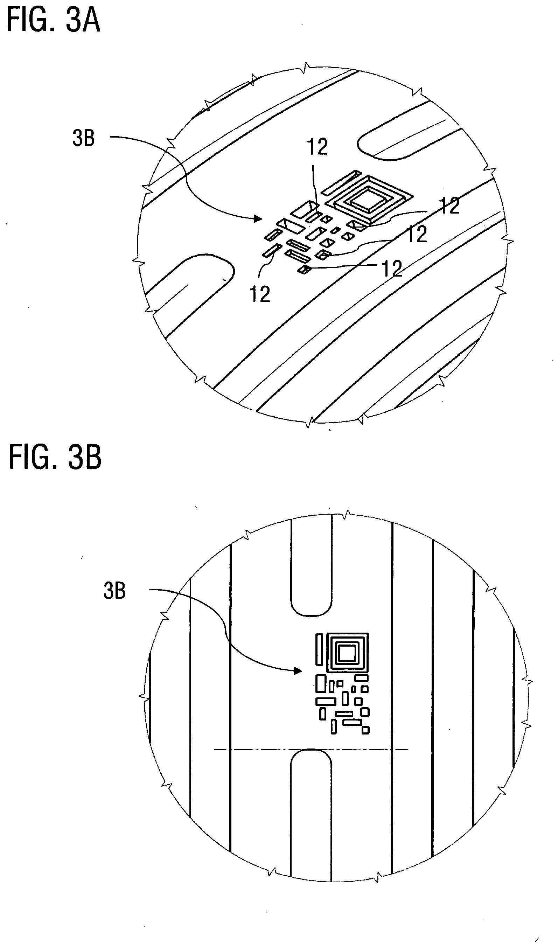

Dies ist in den Figuren 3A und 3B beispielhaft dargestellt, die den Ausschnitt A der Figur 1 in einem Zustand zeigen, der einem höheren Verschleiß entspricht im Vergleich zu dem Verschleißzustand, der in den Figuren 2A und 2B dargestellt ist. Die Figuren 3A und 3B zeigen somit eine Schicht 3B des QR®-Codes, die durch verschleißbedingtes Abtragen der Ebene 3A freigelegt wird.

Im Vergleich zu den Figuren 2A und 2B ist die Anzahl der Punkte und Striche des QR®-Codes 3A in den Figuren 3A und 3B reduziert. Aus der Kontur des QR®-Codes der Figur 3A und 3B kann somit auf einen erhöhten Verschleißzustand geschlossen werden.

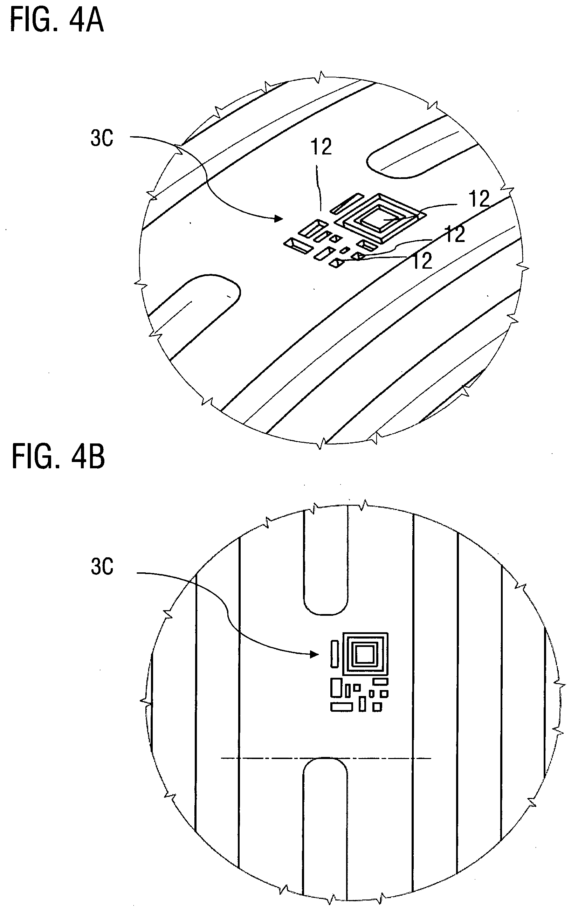

Die Figuren 4A und 4B illustrieren ein weiteren Zustand mit noch höherem Verschleiß, wobei die Ebene 3C des QR®-Codes freigelegt ist. Bei dem QR®-Code 3C ist die Anzahl der Informationsträger 12 weiter reduziert.

Hierbei ist der dreidimensionale QR®-Code so ausgeführt, dass die Tiefe in Verschleißrichtung der einzelnen Informationsträger (Striche und Punkte) unterschiedlich ausgeführt ist. Während einige Informationsträger durch alle Ebenen des QR®-Codes reichen und so in jedem Verschleißzustand sichtbar sind, können andere Informationsträger eine geringere Tiefe aufweisen und so mit abnehmender Verschleißhöhe des Verschleißteils verschwinden.

In einer weiteren Ausführungsvariante (nicht dargestellt) wird ein Teil der Informationsträger zur Codierung von verschleißzustandsunabhängigen Angaben, wie beispielsweise den Hersteller oder das Herstellungsdatum des Verschleißteils, verwendet. Diese Informationsträger bleiben kontinuierlich erhalten und sind in allen freigelegten Ebenen des QR®-Codes sichtbar.

Vorstehend wurde bereits erwähnt, dass zur besseren Erkennbarkeit der schwarzen Punkte und Striche der Zwischenraum mit einer Kontrastmasse aufgefüllt werden kann, die in ihren Verschleißeigenschaften dem Reifenmaterial entspricht und somit genauso schnell verschleißt und keine technische Verschlechterung des Reifens verursacht. Beispielsweise kann hierfür Gummi verwendet werden. Grundsätzlich kann diese Kontrastmasse noch fluoreszierend ausgeführt sein, um die Lesbarkeit auch in schlechter Lichtumgebung zu gewährleisten. Dies ist gerade bei Reifen notwendig, die nicht lenkbar sind und sich in engen Radkästen befinden.

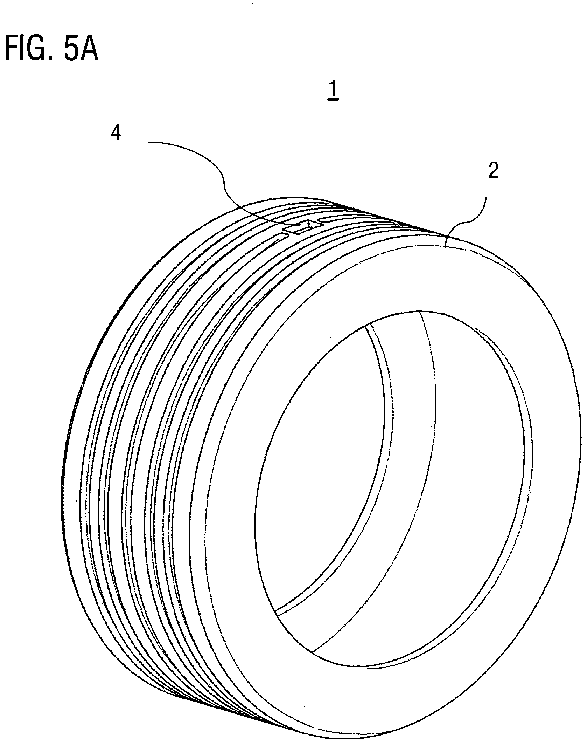

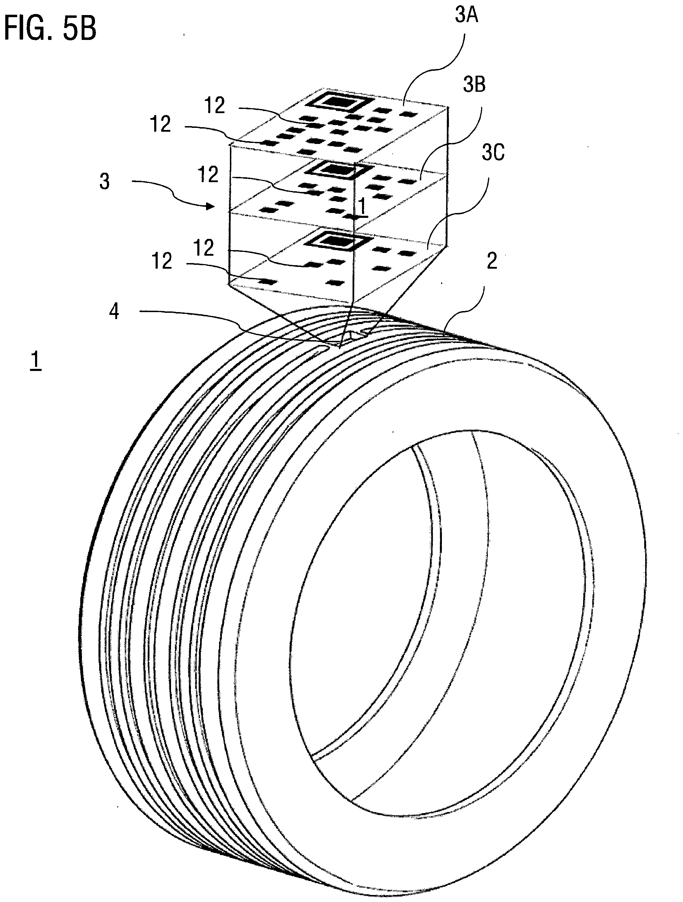

Die Figuren 5A und 5B illustrieren schematisch das Einbringen des Verschleißindikators und dessen mehrschichtigen Aufbau. Wie in Figur 5A dargestellt, kann der Verschleißindikator in eine Tasche 4, die in der Lauffläche des Reifens eingebracht wird, eingesteckt werden. Dies hat insbesondere den Vorteil, dass der Verschleißindikator nachgerüstet und/oder separat gefertigt werden kann.

Der Verschleißindikator kann somit separat, beispielsweise durch Spritzguss, gefertigt werden und anschließend mit einer Nachfüllmasse aufgefüllt werden. Die Füllmasse hat ferner den Vorteil, dass sich kein Schmutz in den Taschen zwischen den Informationsträgern ansammeln kann.

Figur 5B illustriert den mehrschichtigen Aufbau des Verschleißindikators 3, wobei im vorliegendem Beispiel zur Vereinfachung der Darstellung nur drei Ebenen 3A, 3B und 3C des QR®-Codes dargestellt sind, die das verschleißabhängige Erscheinen des Verschleißindikators bzw. QR®-Codes darstellen.

In Figur 5B ist dargestellt, dass die Anzahl der Informationsträger 12 in den oberen Ebenen größer als in den unteren Ebenen ist.

Das Verschleißmerkmal kann insbesondere ein- oder auch mehrteilig ausgeführt sein. Ein mehrteiliges Merkmal kann schichtweise aufgebracht werden oder zuerst zusammengefügt und dann als Einzelteil aufgebracht werden. Bei einem mehrschichtigem Verschleißteil werden mehrere Ebenen mit QR®- oder Barcodes, die schon in Schwarz und Kontrastfarbe ausgeführt sind, nacheinander aufgebracht. Anschließend kann das Verschleißteil in eine vorgesehene Tasche 4 im Reifenmantel 2 eingebracht werden.

Es wird betont, dass die Darstellung mit drei Ebenen und drei unterschiedlichen Ausführungen des QR®-Codes nur beispielhaft ist und der dreidimensionale QR®-Code oder allgemein das dreidimensionale Muster auch eine andere Anzahl unterschiedlicher zweidimensionaler QR®-Codes oder Muster aufweisen kann.

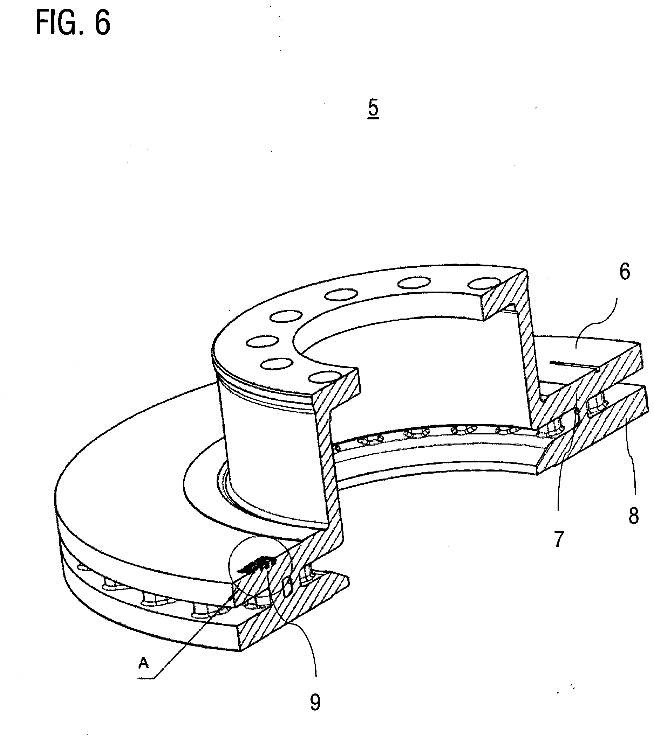

Die Figuren 6 bis 10B illustrieren eine Anwendung der Erfindung, bei der der erfindungsgemäße Verschleißindikator bei einer Bremsscheibe eingesetzt wird.

Figur 6 zeigt eine Schnittansicht einer innenbelüfteten Bremsscheibe 5 mit zwei ringförmigen Bremsscheiben 7, 8. Der Verschleißindikator 9 wird in zumindest einer der Reibflächen 6 eingebracht.

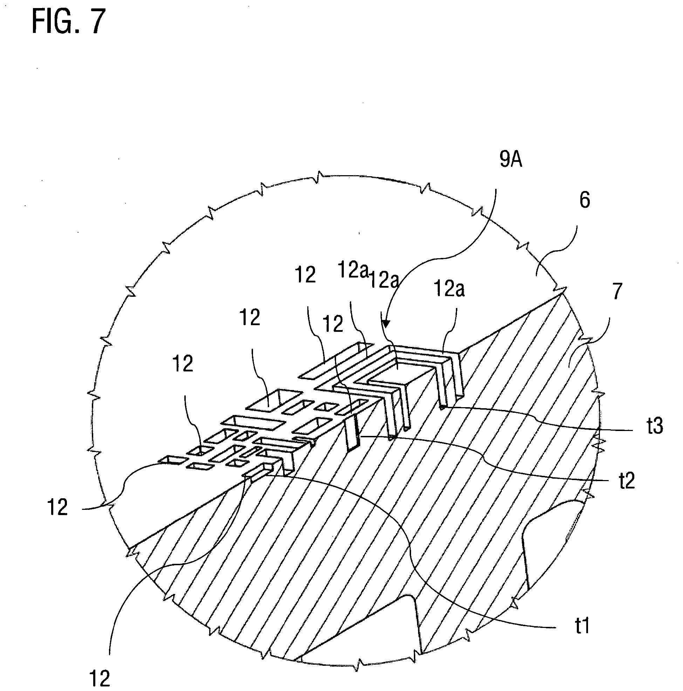

Figur 7 zeigt eine vergrößerte Perspektivansicht des Bereichs A der Figur 6. In die Reibfläche 6 wird beispielsweise durch Bohren oder Fräsen eine dreidimensionale Struktur eingebracht, wobei die eingebrachten Vertiefungen die Informationsträger 12, 12a eines dreidimensionaler QR®-Codes 9 sind. In Draufsicht auf die Reibfläche ist jeweils eine zweidimensionale Ebene des QR®-Codes sichtbar.

Aus Gründen der vereinfachten Darstellbarkeit und besseren Übersichtlichkeit sind wiederum nur einige der Vertiefungen bzw. Informationsträger des QR®-Codes mit Bezugszeichen gekennzeichnet.

Figur 7 zeigt, dass sich die einzelnen Informationsträger 12, 12a unterschiedlich tief in Verschleißrichtung, d. h. senkrecht zur Reibfläche 6 erstrecken, so dass sich die Kontur des QR®-Codes 9 in Abhängigkeit vom Verschleißzustand der Bremsscheibe ändert.

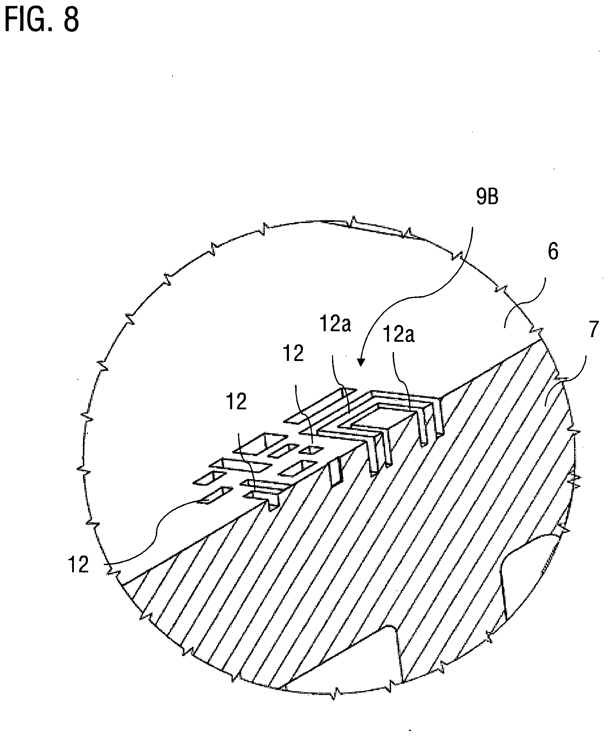

Figur 8 zeigt einen Zustand höheren Verschleißes im Vergleich zur Figur 7. Folglich ist im Verschleißzustand der Figur 8 eine andere Ebene 9B des QR®-Codes freigelegt, da die darüber liegende Ebene 9A verschleißbedingt abgetragen wurde.

Die Schicht 9B des QR®-Codes der Figur 8 zeigt weniger Informationsträger 12 als die Ebene 9A der Figur 7. Aufgrund der veränderten Kontur der freigelegten Ebene ändert sich der Informationsgehalt des QR®-Codes. Der Kontur der Ebene 9B ist ein Zustand höheren Verschleißes als der Kontur der Ebene 9A der Figur 7 zugeordnet, was entsprechend im Endverbraucher-Mobilgerät, z. B. Smartphone, hinterlegt ist. Erkennt das Smartphone durch Fotografieren der Stelle A der Reibfläche 6 die Kontur der Ebene 9B, kann das Smartphone den entsprechenden Verschleißzustand bestimmen und dem Benutzer anzeigen.

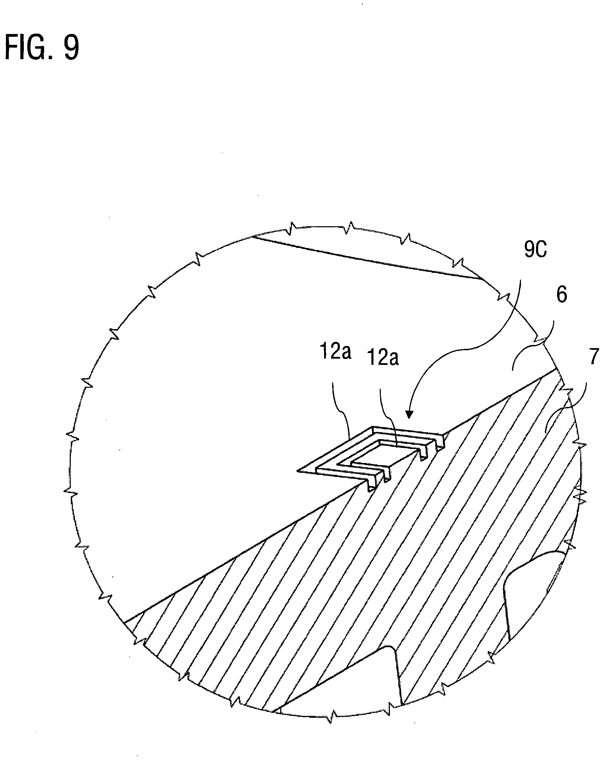

In dem vereinfachten Beispiel der Figur 3 sind drei Tiefen t1, t2 und t3 der Informationsträger 12, 12a dargestellt. Somit verschwinden mit zunehmenden Verschleiß zuerst die Informationsträger 12 mit der Tiefe t1, die in der Figur 8 nicht mehr sichtbar sind, und anschließend die Informationsträger 12 mit der Tiefe t2, die in der Figur 9 nicht mehr sichtbar sind. In Figur 9 sind somit nur noch die Informationsträger 12a mit der Tiefe t3 sichtbar.

Die freigelegte Ebene 9C des Verschleißzustands der Figur 9 enthält nur noch die Elemente 12A des QR®-Codes, die die höchste Tiefe aufweisen. Wird somit die Bremsscheibe durch Verschleiß soweit abgetragen, dass nur noch der QR®-Code 9C sichtbar ist, kann geschlussfolgert werden, dass die Bremsscheibe einen sehr hohen Verschleiß aufweist und erneuert werden muss.

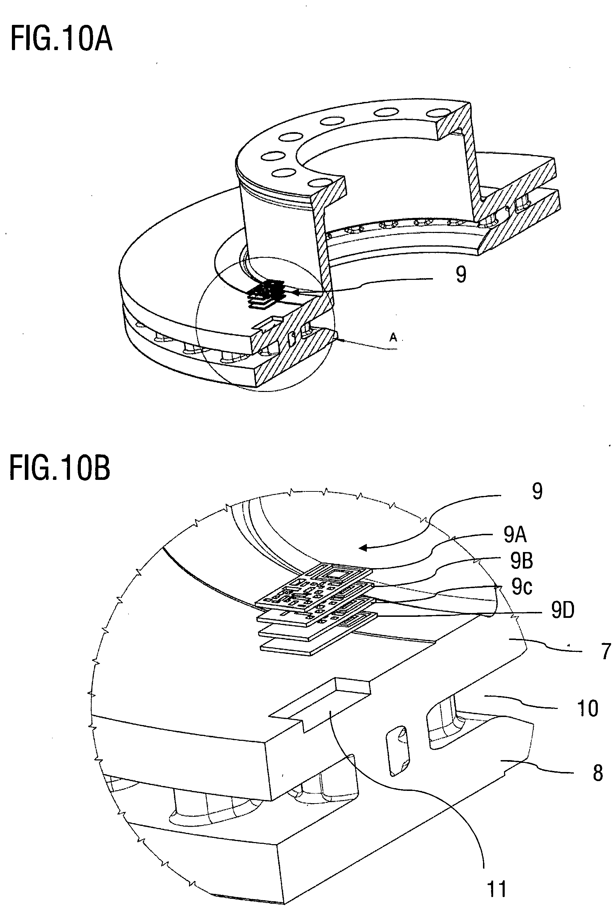

Die Figuren 10A und 10B illustrieren schematisch den mehrschichtigen Aufbau des Verschleißindikators 9 und das Einbringen des Verschleißindikators 9 in eine Tasche 11, die in die Reibfläche 6 der Bremsscheibe eingebracht ist. Die Ebenen 9A, 9B und 9C der QR®-Codes stellen das verschleißabhängige Erscheinen des Verschleißindikators bzw. des QR®-Codes dar.

In einer Ausführung der Erfindung können in Bremsscheiben definierte Ausnehmungen 11 wie z. B. Taschen oder Bohrungen vorgesehen sein, in welche der Verschleißindikator in Form des mehrschichtigen QR®-Codes 9 nachträglich fixiert wird. Dies kann durch Einpressen, Aufschweißen oder Einschrauben erfolgen.

Der Verschleißindikator selbst kann in einem eigenen Verfahren hergestellt werden. Durch eine Schichtbauweise des Verschleißindikators können dann auch mögliche komplexe dreidimensionale Formen zur Darstellung eines QR®-Codes leichter umgesetzt werden. Alternativ können auch umformende Maßnahmen zum Einbringen des Merkmals verwendet werden.

Ferner ist anzumerken, dass neben dem QR®-Code ferner auch ein Strichcode verwendet werden kann. Neben den verschleißabhängigen Informationen können derartige Codes auch verwendet werden, um Informationen zur Bremsscheibe selbst zu codieren, die sich über den Verschleiß hinweg nicht ändern, beispielsweise Herstellungsdatum, Achse, Fahrzeugseite, eindeutige Herstellerkennung (ID), etc..

Ein weiterer Vorteil der Verwendung von QR®-Codes ist die Möglichkeit, Daten in redundanter Form zu codieren, so dass über die Vielzahl der Punkte somit auch Messungenauigkeiten durch Verunreinigen oder ähnliches vermieden werden können.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Reifen
- 2: Laufflächen
- 3: Verschleißindikator, QR®-Code
- 3A, 3B, 3C: Verschleißabhängige Ebenen des Verschleißindikators bzw. QR®-Codes
- 4: Einstecktasche
- 5: Bremsscheibe
- 6: Reibfläche
- 7, 8: Bremsscheibenringe
- 9: Verschleißindikator, QR®-Code
- 9A, 9B, 9C: verschleißabhängige Ebenen des Verschleißindikators bzw. QR®-Codes
- 10: Zwischenraum zur Innenbelüftung
- 11: Einstecktasche
- 12, 12A: Informationsträger
- t1, t2, t3: Tiefe der Informationsträger

## Patentansprüche

1. Bremsscheibe (5), vorzugsweise für ein Fahrzeug, umfassend einen Verschleißindikator, der in eine Reibfläche (7) der Bremsscheibe (5) eingebracht ist und dessen Erscheinung sich in Abhängigkeit von einem Verschleißzustand der Bremsscheibe ändert,
**dadurch gekennzeichnet,**
**dass** der Verschleißindikator ein mehrdimensionales Muster (9) umfasst, mit einer Mehrzahl von in Verschleißrichtung übereinander angeordneten unterschiedlichen Ebenen, die jeweils ein Muster aufweisen, das jeweils einem Verschleißzustand zugeordnet ist, wobei das mehrdimensionale Muster so am Verschleißteil angeordnet ist, dass in Abhängigkeit von dem Verschleißzustand unterschiedliche Ebenen (9A, 9B, 9C) des Musters freigelegt sind, und
**dass** in der jeweils freigelegten Ebene des Musters Daten codiert sind, die indikativ für den jeweiligen Verschleißzustand sind, wobei die verschiedenen Ebenen des mehrdimensionalen Musters einen eindimensionalen oder zweidimensionalen maschinenlesbaren Code umfassen.

2. Bremsscheibe nach Anspruch 1, **dadurch gekennzeichnet, dass** die jeweils freigelegte Ebene des Musters opto-elektronisch lesbar ist.

3. Bremsscheibe nach Anspruch 1 oder 2, **dadurch gekennzeichnet, dass** sich das Muster (9) in Verschleißrichtung diskret ändert, derart, dass in jedem Verschleißzustand eindeutig feststellbar ist, welches der übereinander angeordneten Muster des mehrdimensionalen Musters freigelegt ist.

4. Bremsscheibe nach einem der Ansprüche 1 bis 3, **dadurch gekennzeichnet,**
a) **dass** die verschiedenen Ebenen (9A, 9B, 9C) des mehrdimensionalen Musters (9) jeweils einen 2D-Code, vorzugsweise einen QR®-Code, darstellen; oder
b) **dass** die verschiedenen Ebenen des mehrdimensionalen Musters jeweils einen 1D-Code, vorzugsweise einen Strichcode, darstellen.

5. Bremsscheibe nach Anspruch 4, **dadurch gekennzeichnet, dass** sich eine Form des 2D-Codes und/oder des 1D-Codes in Verschleißrichtung so ändert, dass eine Anzahl und/oder Form und/oder Lage und/oder Farbe von Informationsträgern (12) variiert.

6. Bremsscheibe nach einem der vorhergehenden Ansprüche, **dadurch gekennzeichnet, dass** in dem Muster weitere verschleißzustandsunabhängige Eigenschaften des Verschleißteils codiert sind.

7. Bremsscheibe nach Anspruch 6, **dadurch gekennzeichnet, dass** ein Bereich des Musters, in dem die verschleißzustandsunabhängigen Eigenschaften des Verschleißteils codiert sind, sich in Verschleißrichtung nicht ändert.

8. Bremsscheibe nach einem der vorhergehenden Ansprüche, **dadurch gekennzeichnet,**
(a) **dass** das mehrdimensionale Muster durch eine Mehrzahl von nebeneinander angeordneten Taschen oder Erhebungen gebildet ist, die in die Reibfläche (7) eingebracht sind; und
(b) **dass** sich in Abhängigkeit vom Verschleiß der Reibfläche (7) die Zahl und/oder Form und/oder Lage der in Draufsicht auf der Reibfläche (7) sichtbaren Taschen oder Erhebungen ändert.

9. System zur Verschleißprüfung, umfassend
eine Bremsscheibe (5) nach einem der vorhergehenden Ansprüche 4 bis 9; und
ein multi-funktionell nutzbares Endverbraucher-Mobilgerät, wobei das Mobilgerät mittels einer Applikationssoftware eingerichtet ist, einen sichtbaren 1D-Code oder 2D-Code (9A, 9B, 9C) des Verschleißindikators (9) opto-elektronisch zu erfassen und auf Basis des erfassten 1D-Codes oder 2D-Codes (9A, 9B, 9C) einen Verschleißzustand und/oder weitere Eigenschaften des Verschleißteils (9) festzustellen

10. Fahrzeug, insbesondere Nutzfahrzeug, mit einer Bremsscheibe (5) nach einem der vorhergehenden Ansprüche 1 bis 8.

## Claims

1. A brake disk (5) preferably for a vehicle, comprising a wear indicator which is incorporated in a friction surface (7) of the brake disk (5) and whose appearance changes depending on a wear condition of the brake disk,
**characterized in that**
the wear indicator comprises a multidimensional pattern (9) having a plurality of different levels disposed one above the other in the direction of wear, each comprising a pattern that is associated with a wear condition, wherein the multidimensional pattern is disposed on the wearing part such that different levels (9A, 9B, 9C) of the pattern are exposed depending on the wear condition, and
**in that** in each exposed level of the pattern data that are indicative of the respective wear condition are encoded, wherein the different levels of the multidimensional pattern comprise a one-dimensional or two-dimensional machine-readable code.

2. The brake disk according to Claim 1, **characterized in that** each exposed level of the pattern can be read optoelectronically.

3. The brake disk according to Claim 1 or 2, **characterized in that** the pattern (9) changes discretely in the direction of wear, such that in any wear condition it can be positively determined which of the patterns of the multidimensional pattern that are disposed one above the other is exposed.

4. The brake disk according to any one of Claims 1 to 3, **characterized in that**
(a) the different levels (9A, 9B, 9C) of the multidimensional pattern (9) each represent a 2D code, preferably a QR® code; or
(b) the different levels of the multidimensional pattern each represent a 1D code, preferably a barcode.

5. The brake disk according to Claim 4, **characterized in that** a shape of the 2D code and/or of the 1D code changes in the direction of wear such that a number and/or shape and/or position and/or colour of information carriers (12) varies.

6. The brake disk according to any one of the preceding claims, **characterized in that** other wear condition-independent properties of the wearing part are encoded in the pattern.

7. The brake disk according to Claim 6, **characterized in that** a region of the pattern in which the wear condition-independent properties of the wearing part are encoded does not change in the direction of wear.

8. The brake disk according to any one of the preceding claims, **characterized in that**
(a) the multidimensional pattern is formed by a plurality of juxtaposed pockets or elevations that are incorporated in the friction surface (7); and
(b) the number and/or shape and/or position of the pockets or elevations visible in plan view of the friction surface (7) changes depending on the wear of the friction surface (7).

9. A system for checking wear, comprising
a brake disk (5) according to any one of the preceding Claims 4 to 9; and
a multifunctionally usable end user mobile device, wherein
the mobile device is configured by means of application software to optoelectronically record a visible 1D code or 2D code (9A, 9B, 9C) of the wear indicator (9) and to determine a wear condition and/or other properties of the wearing part (9) on the basis of the recorded 1D code or 2D code (9A, 9B, 9C).

10. A vehicle, especially a commercial vehicle, with a brake disk (5) according to any one of the preceding Claims 1 to 8.

## Revendications

1. Disque de frein (5), de préférence pour un véhicule, comprenant un indicateur d'usure, qui est incorporé dans une face de friction (7) du disque de frein (5) et dont l'apparence change en fonction d'un état d'usure du disque de frein, **caractérisé en ce que** l'indicateur d'usure comprend un motif multidimensionnel (9), avec une multiplicité de plans différents disposés l'un au-dessus de l'autre dans la direction de l'usure, qui présentent respectivement un motif qui est associé respectivement à un état d'usure, dans lequel le motif multidimensionnel est disposé sur la pièce d'usure de telle manière que des plans différents (9A, 9B, 9C) du motif soient exposés en fonction de l'état d'usure, et **en ce que** des données sont encodées dans le plan respectivement exposé du motif, qui sont indicatives de l'état d'usure respectif, dans lequel les différents plans du motif multidimensionnel comprennent un code unidimensionnel ou bidimensionnel lisible à la machine.

2. Disque de frein selon la revendication 1, **caractérisé en ce que** le plan respectivement exposé du motif est lisible par voie optoélectronique.

3. Disque de frein selon la revendication 1 ou 2, **caractérisé en ce que** le motif (9) change de façon discrète dans la direction d'usure, de telle manière que l'on puisse, dans chaque état d'usure, constater clairement lequel des motifs disposés l'un au-dessus de l'autre du motif multidimensionnel est exposé.

4. Disque de frein selon l'une quelconque des revendications 1 à 3, **caractérisé en ce que**
a) les différents plans (9A, 9B, 9C) du motif multidimensionnel (9) représentent respectivement un code 2D, de préférence un code QR®; ou
b) les différents plans du motif multidimensionnel représentent respectivement un code 1D, de préférence un code à barres.

5. Disque de frein selon la revendication 4, **caractérisé en ce qu'**une forme du code 2D et/ou du code 1D change dans la direction de l'usure, de telle manière qu'un nombre et/ou une forme et/ou une position et/ou une couleur de supports d'informations (12) change.

6. Disque de frein selon l'une quelconque des revendications précédentes, **caractérisé en ce que** d'autres propriétés de la pièce d'usure dépendant de l'état d'usure sont encodées dans le motif.

7. Disque de frein selon la revendication 6, **caractérisé en ce qu'**une région du motif, dans laquelle les propriétés de la pièce d'usure dépendant de l'état d'usure sont encodées, ne change pas dans la direction de l'usure.

8. Disque de frein selon l'une quelconque des revendications précédentes, **caractérisé en ce que**
a) le motif multidimensionnel est formé par une multiplicité de fosses ou de bosses disposées les unes à côté des autres, qui sont pratiquées dans la face de friction (7); et
b) le nombre et/ou la forme et/ou la position des fosses ou des bosses visibles dans une vue en plan de la face de friction (7) change en fonction de l'usure de la face de friction (7).

9. Système de contrôle d'usure, comprenant
un disque de frein (5) selon l'une quelconque des revendications précédentes 4 à 9; et
un appareil mobile terminal utilisable de façon multifonctionnelle, dans lequel l'appareil mobile est conçu au moyen d'un logiciel d'application, pour détecter par voie optoélectronique un code 1D ou un code 2D (9A, 9B, 9C) de l'indicateur d'usure (9) et pour constater sur la base du code 1D ou du code 2D détecté (9A, 9B, 9C) un état d'usure et/ou d'autres propriétés de la pièce d'usure (9).

10. Véhicule, en particulier véhicule utilitaire, doté d'un disque de frein (5) selon l'une quelconque des revendications précédentes 1 à 8.
